# EUROPEAN PATENT APPLICATION

(11) **EP 2 511 122 A2**
(43) Date of publication of application: **17.10.2012**
(21) Application number: 12163762.3
(22) Date of filing: 11.04.2012
(51) Int. Cl.: B60L 1/00, B60L 11/18

(54) **Integrated electric meter and electric vehicle charging station (evcs)**

(30) Priority: 14.04.2011 US 201113086937
(71) Applicant: General Electric Company, Schenectady, NY 12345 (US)
(72) Inventor: Sfaelos, Jimmy, Atlanta, GA Georgia 30339 (US)
(74) Representative: Picker, Madeline Margaret

(57) **Abstract**

Embodiments of the invention described herein comprise an integrated electric meter and electric vehicle charging station (EVCS) (206) and methods of using embodiments of the integrated electric meter and EVCS (206) for charging an electric vehicle (112).

## Description

### BACKGROUND OF THE INVENTION

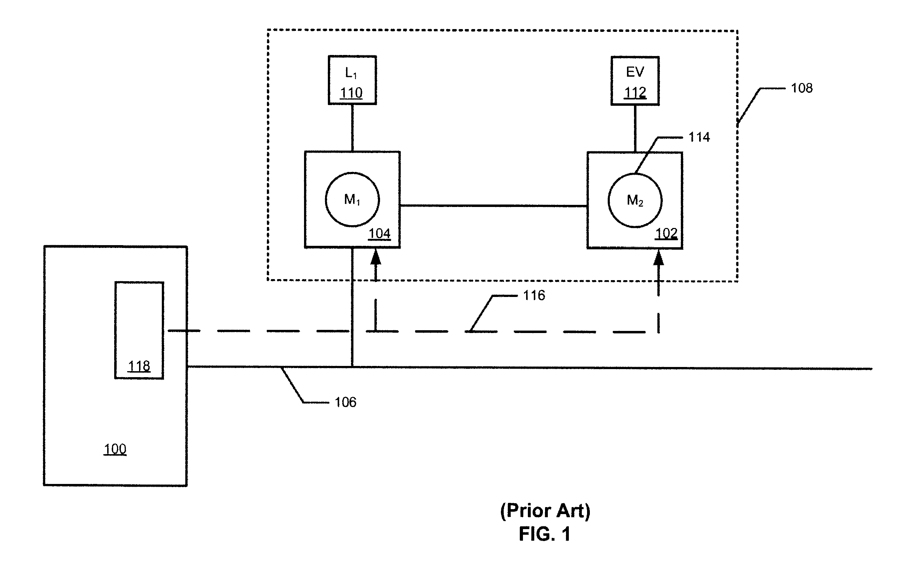

EVs (electric vehicles, which include PEVs (plug-in electric vehicles) and PHEVs (plug-in hybrid electric vehicles)) use batteries as a source of energy at least part of the time while in operation. These batteries discharge during use and are required to be recharged on an intermittent basis. In some instances, this charging occurs at electric vehicle charging stations (EVCS) that can be located at the home of the EV operator. SAE International defines 240 Volt AC charging as level 2 charging, and 500 Volt DC high-current charging as level 3 charging. Owners can install a level 2 charging station at home, while businesses and local government provide level 2 and level 3 public charging stations that supply electricity for a fee. Currently, as shown in FIG. 1, the EVCS 102 is separate from the electric meter 104 at the operator's home or other facility. A utility 100 delivers electric power over a distribution system 106 to a facility 108. The electric meter 104 is used to measure total electric consumption of all loads 110 at the facility 108, including load created by the EVCS 102 and an EV 112. The EVCS 102 has a separate enclosure from that of the meter 104, and comprises a second meter 114 for metering electrical consumption of the EV 112. Additionally, as shown in FIG. 1, the EVCS 102 requires separate communications from the utility 100. Generally, such communications are over a network 116 that communicates with a computing device 114 under control of the utility 100. Therefore, the use of separate revenue meter 104, a meter 114 for the EVCS 102, and the EVCS 102, as shown in prior art FIG. 1, results in a duplication of at least enclosures, metering components, and communications components.

Therefore, systems and methods are desired that address challenges in the art, some of which are described above. Specifically, systems and method of integrating an electric meter and an EVCS are desired that efficiently reduces duplication of parts and devices.

### BRIEF DESCRIPTION OF THE INVENTION

Described herein are embodiments of an integrated electric meter and electric vehicle charging station (EVCS) and methods of using the integrated device for charging an electric vehicle.

In one aspect, an integrated electric meter and EVCS is described. This embodiment of an integrated electric meter is comprised of a charging cable and a plug, and an enclosure that substantially encloses an electric meter and an EVCS. In one aspect, the electric meter comprises at least one metering microcontroller, wherein the metering microcontroller is configured to separately measure electrical consumption of one or more electrical loads; one or more current transformers (CTs) and one or more potential transformers (PTs), wherein the one or more CTs and the one or more PTs provide current and voltage signals to the at least one metering microcontroller for measuring the electrical consumption of the one or more electrical loads; and a network interface operably connected with the metering microcontroller, wherein the network interface enables bi-directional communications with the metering microcontroller over a network. Further comprising the integrated electric meter and EVCS is the EVCS, which in one aspect is comprised of a charging contactor; and a charging controller operably connected with the network interface and the charging contactor. The charging controller is configured to control the charging contactor; detect whether a charging cable is connected to an electric vehicle (EV); determine a level of charge of a battery of the EV; and manage a programmable charging schedule for the EV. The charging cable is connected to the EVCS and the plug, and the plug attaches the charging cable to the EV.

In another aspect, a method of charging an EV using an embodiment of an integrated electric meter and EVCS is described. This embodiment of a method comprises providing an integrated electric meter and electric vehicle charging station (EVCS), wherein the integrated electric meter and EVCS is comprised of a charging cable and a plug, and an enclosure that substantially encloses an electric meter and electric vehicle charging station (EVCS). The electric meter comprises at least one metering microcontroller, wherein the metering microcontroller is configured to separately measure electrical consumption of one or more electrical loads; one or more current transformers (CTs) and one or more potential transformers (PTs), wherein the one or more CTs and the one or more PTs provide current and voltage signals to the at least one metering microcontroller for measuring the electrical consumption of the one or more electrical loads; and a network interface operably connected with the metering microcontroller, wherein the network interface enables bi-directional communications with the metering microcontroller over a network. The EVCS comprises a charging contactor; and a charging controller operably connected with the network interface and the charging contactor, wherein the charging controller is configured to: control the charging contactor; detect whether a charging cable is connected to an electric vehicle (EV); determine a level of charge of a battery of the EV; and manage a programmable charging schedule for the EV. The charging cable is connected to the EVCS and the plug, and the plug attaches the charging cable to the EV. The embodiment of a method further comprises connecting the EV to the integrated electric meter and EVCS using the plug and the charging cable; and charging the battery of the EV using the integrated electric meter and EVCS.

Additional advantages will be set forth in part in the description which follows or may be learned by practice. The advantages will be realized and attained by means of the elements and combinations particularly pointed out in the appended claims. It is to be understood that both the foregoing general description and the following detailed description are given by way of explanation and example only and are not restrictive, as claimed.

### BRIEF DESCRIPTION OF THE DRAWINGS

The accompanying drawings, which are incorporated in and constitute a part of this specification, illustrate embodiments and together with the description, serve to explain the principles of the methods and systems:
FIG. 1 is a prior art overview illustration of a separate electric meter and electric vehicle charging station (EVCS);
FIG. 2 is a single-line block diagram of a section of an exemplary utility distribution system such as, for example, an electric distribution system;
FIG. 3 illustrates an overview block diagram of a non-limiting embodiment of an integrated electric meter and EVCS that can be used to practice embodiments of the present invention;
FIG. 4 is a block diagram of an entity capable of operating as meter electronics in accordance with one embodiment of the present invention;
FIG. 5 is a flowchart illustrating a method of practicing an embodiment of the present invention; and
FIG. 6 is a block diagram illustrating an exemplary operating environment for performing the disclosed methods.

### DETAILED DESCRIPTION OF EMBODIMENTS OF THE INVENTION

Before the present methods and systems are disclosed and described, it is to be understood that the methods and systems are not limited to specific synthetic methods, specific components, or to particular compositions. It is also to be understood that the terminology used herein is for the purpose of describing particular embodiments only and is not intended to be limiting.

As used in the specification and the appended claims, the singular forms "a," "an" and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by use of the antecedent "about," it will be understood that the particular value forms another embodiment. It will be further understood that the endpoints of each of the ranges are significant both in relation to the other endpoint, and independently of the other endpoint. Further, when examples of ranges are provided herein, it is to be appreciated that the given ranges also include all subranges therebetween, unless specifically stated otherwise.

"Optional" or "optionally" means that the subsequently described event or circumstance may or may not occur, and that the description includes instances where said event or circumstance occurs and instances where it does not.

Throughout the description and claims of this specification, the word "comprise" and variations of the word, such as "comprising" and "comprises," means "including but not limited to," and is not intended to exclude, for example, other additives, components, integers or steps. "Exemplary" means "an example of" and is not intended to convey an indication of a preferred or ideal embodiment. "Such as" is not used in a restrictive sense, but for explanatory purposes.

Disclosed are components that can be used to perform the disclosed methods and systems. These and other components are disclosed herein, and it is understood that when combinations, subsets, interactions, groups, etc. of these components are disclosed that while specific reference of each various individual and collective combinations and permutation of these may not be explicitly disclosed, each is specifically contemplated and described herein, for all methods and systems. This applies to all aspects of this application including, but not limited to, steps in disclosed methods. Thus, if there are a variety of additional steps that can be performed it is understood that each of these additional steps can be performed with any specific embodiment or combination of embodiments of the disclosed methods.

The present methods and systems may be understood more readily by reference to the following detailed description of preferred embodiments and the Examples included therein and to the Figures and their previous and following description.

EVs (electric vehicles, which include PEVs (plug-in electric vehicles) and PHEVs (plug-in hybrid electric vehicles)), require their batteries to be charged after use. In many instances, this charging occurs at electric vehicle charging stations (EVCS) that may be located at the operator's home or other location where an electric meter related to that party is found. Currently; however, as shown in prior art FIG. 1, the electric revenue meter 104 and the EVCS 102 are two separate devices that comprise some duplicate parts. Therefore, the use of a separate meter 104 and EVCS 102 as shown in prior art FIG. 1 results in duplication of at least enclosures, metering components, and communications components.

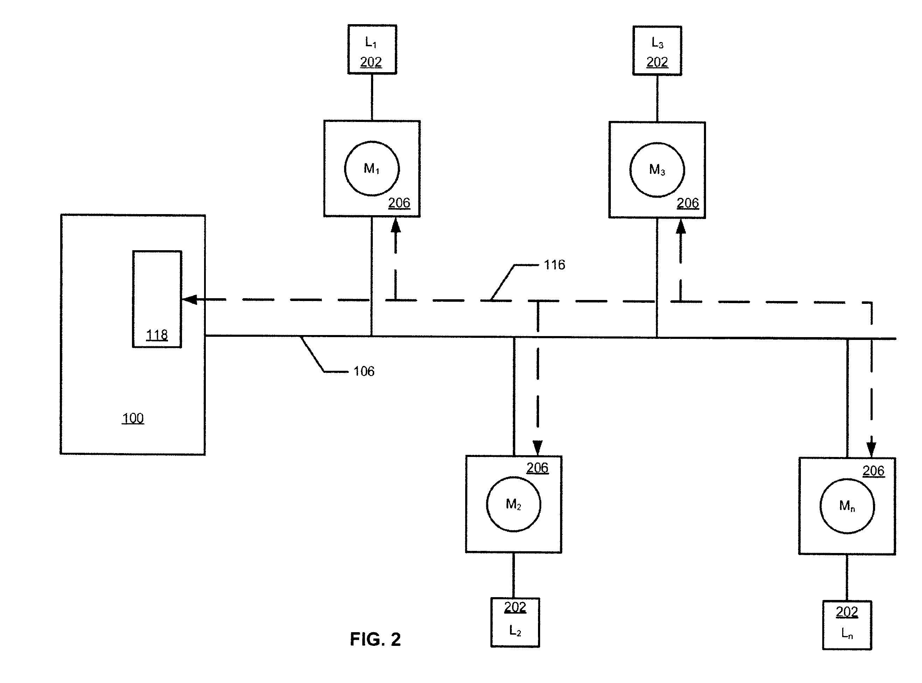

Systems and methods of integrating the electric revenue meter and the EVCS are described herein. Specifically, systems and methods of integrating an electric meter and an EVCS are described that efficiently reduces duplication of parts and devices Referring to FIG. 2, an illustration of one type of system that would benefit from embodiments of the present invention is provided. FIG. 2 is a single-line block diagram of a section of an exemplary utility distribution system such as, for example, an electric distribution system. As shown in FIG. 2, a utility service is delivered by a utility provider 100 to various loads L₁-Lₙ 202 through a distribution system 106. In one aspect, the utility service provided can be electric power. Though shown in FIG. 2 as a single-line diagram, it is to be appreciated that the distribution system 106 can be comprised of single-phase and/or poly-phase components and be of varying voltage levels. Consumption and demand by the loads 202 can be measured at the load locations by integrated meters and EVCS M₁-Mₙ 206. The meters that comprise an integrated meter and EVCS 206 can be single-phase or poly-phase electric meters, as known to one of ordinary skill in the art, depending upon the load 202. For example, the load can be single-phase and therefore the meter can be single phase. Single-phase loads can be connected to different phases (e.g., phase A, phase B or phase C) of the distribution system 106. Similarly, for example, the load 202 can be a poly-phase load such as a three-phase load and the meter can be a three-phase meter that meters the three phases serving the load 202. In some instances an electrical distribution system 106 may be a poly-phase system such as a three-phase, four-wire network, which supplies power-using feeders. Each of the feeder lines then branches into multiple circuits to power a plurality of local pole-mounted or pad-mounted transformers, which step the voltage down to final voltages of, for example, 120 or 240 volts per phase for delivery and metering at commercial and residential customer locations. Generally, residential customers can be connected to any one phase of the three-phase system using a single-phase meter and commercial customers can be connected to all the three phases using three-phase meter. In one aspect, the load 202 can be comprised of an EV and additional loads such as heating, cooling, lighting, and the like for a facility at the location of the integrated meter and EVCS 206. In one aspect, the meter of the integrated meter and EVCS 206 can be used to meter total electrical consumption by all loads 202 at the facility (including the EV), and to separately meter electrical consumption of the EV.

In one aspect, the electric meter used in an embodiment of the integrated meters and EVCS 206 is a smart meter as described herein and as known to one of ordinary skill in the art. Hereinafter, the specification will refer to the meter as a "meter," "electric meter," and/or "smart meter," where the terms can be used interchangeably. One non-limiting example of a smart meter is the GE I210+c meter as available from General Electric Company ("GE") (Schenectady, NY). While consumption or demand information of loads 202 is used by the utility provider 100 for billing the consumer, it also can be used for other purposes including planning and profiling the utility distribution system. In some instances, utility providers 100 desire to electronically communicate with the integrated meter and EVCS 206 for numerous purposes including scheduling disconnection or connection of utility services to the loads 202, automatic meter reading (AMR), load shedding and load control, automatic distribution and smart-grid applications, outage reporting, time of uses scheduling and metering, providing additional services such as Internet, video, and audio, etc. In many of these instances, the integrated meters and EVCS 206 can be configured to communicate with one or more computing devices 118 through a communications network 116, which can be wired (including fiber optic), wireless or a combination of wired and wireless, as known to one of ordinary skill in the art. In one aspect, the network I16 is an advanced metering infrastructure (AMI) network. AMI refers to systems that measure, collect and analyze energy usage, and interact with advanced devices such as electricity meters, gas meters, water meters, EVCS and the like through various communication media either on request (on-demand) or on predefined schedules. This infrastructure includes hardware, software, communications, consumer energy displays and controllers, customer associated systems, meter data management (MDM) software, supplier and network distribution business systems, and the like. The network 116 between the integrated meters and EVCS 206 and business systems allows collection and distribution of information to customers, suppliers, utility companies and service providers. This enables these businesses to either participate in, or provide, demand response solutions, products and services. By providing information to customers, the system assists a change in energy usage from their normal consumption patterns, either in response to changes in price or as incentives designed to encourage lower energy usage use at times of peak-demand periods or higher wholesale prices or during periods of low operational systems reliability. In one aspect, the network 116 comprises at least a portion of a smart grid network. In one aspect, the network 116 utilizes one or more of one or more of a WPAN (e.g., ZigBee, Bluetooth), LAN/WLAN (e.g., 802.11n, microwave, laser, etc.), WMAN (e.g., WiMAX, etc.), WAN/WWAN (e.g., UMTS, GPRS, EDGE, CDMA, GSM, CDPD, Mobitex, HSDPA, HSUPA, 3G, etc.), RS232, USB, Firewire, Ethernet, wireless USB, cellular, OpenHAN, power line carrier (PLC), broadband over power lines (BPL), and the like. Such integrated meters and EVCS 206 can be equipped with one or more switches that can be used to remotely connect or disconnect the service or product delivered.

Referring again to prior art FIG. 1, when a separate revenue meter 104 and EVCS 102 are used, there are separate network communications required for both, the meter 104 and the EVCS 102. Furthermore, there is a separate meter 114 dedicated to the EVCS 102 as well as separate enclosures for both, the meter 104 and the EVCS 102. Generally, EVCS 102 also lack tamper detection.

Embodiments of methods, systems and devices to integrate the electric revenue meter and EVCS at a facility are desired. Therefore, embodiments of methods, devices and systems that integrate a revenue meter and an EVCS are described herein, wherein the integrated unit has capabilities beyond that of measurement of utility service consumption.

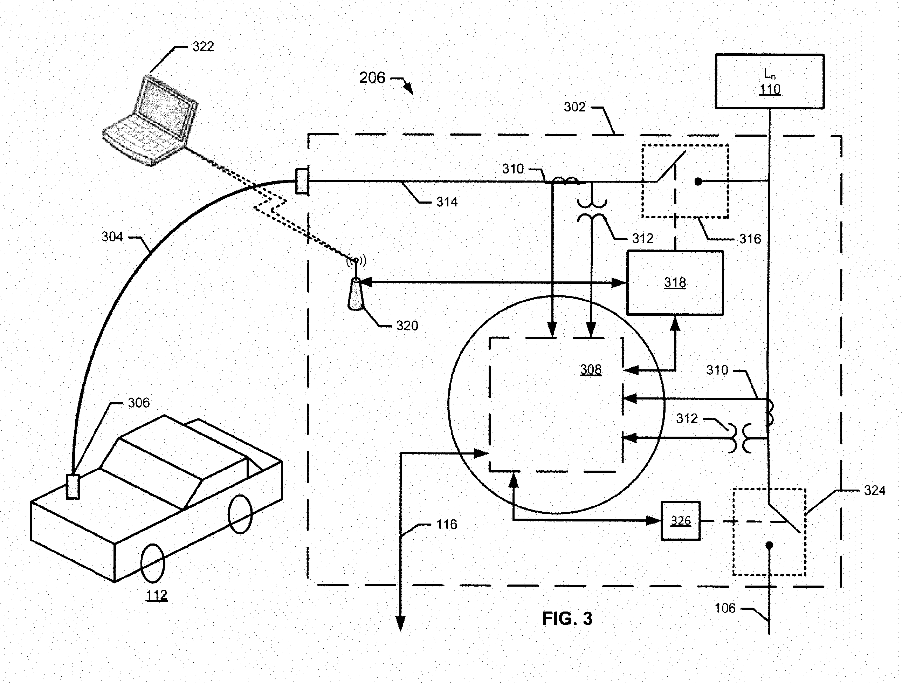

FIG. 3 illustrates an overview block diagram of a non-limiting embodiment of an integrated electric meter and electric vehicle charging station (EVCS) 206 that can be used to practice embodiments of the present invention. In this exemplary embodiment, the utility service 106 is shown in single-line fashion and can represent single-phase or poly-phase electric power. It is to be appreciated that the embodiments of the invention can be used with single- and poly-phase electrical systems such as two-phase, three-phase, four-phase, etc. In one aspect, the embodiment of an integrated electric meter and EVCS 206 can be comprised of an enclosure 302, an electric meter, an EVCS, a charging cable 304, and a charging plug 306. The enclosure 302 substantially encloses the components that comprise the meter and the EVCS. In one aspect, the enclosure has a National Electrical Manufacturer's Association (NEMA) 4 rating, in accordance with applicable NEMA standards which are incorporated herein by reference. In one aspect, the enclosure 302 further comprises tamper detection such as locks, seals, and the like. In one aspect, tamper detection for the enclosure 302 can comprise an electro-mechanical switch that closes or completes an I/O input circuit to a microprocessor or microcontroller of the meter electronics 308 whenever the enclosure 302 is sealed. If the enclosure 302 is forced open, the electro-mechanical switch opens the I/O input circuit to the microprocessor or microcontroller, which may be instructed by the software programming in the memory of the meter electronics 308 to send an alarm message or signal over the AMI 116 to the computing device 118 whenever the I/O input circuit is opened.

In one aspect, the electric meter can be comprised of metering electronics 308. In one aspect, metering electronics 308 includes at least one metering microcontroller (not shown in FIG. 3), wherein the metering microcontroller can be configured to separately measure electrical consumption of one or more electrical loads. In one aspect, the metering electronics 308 comprise at least a memory, and one or more metering microcontrollers and provide an interface for receiving a signal from the network 116. The metering electronics 308 can also comprise a transmitter that can be used to transmit information from the meter over the network 116 to a separate computing device 118. In one aspect, the meter's electronics 308 can comprise one or more metering micro-controllers including, for example, a Teridian 6533 controller or a Teridian 6521 controller as are available from Maxim Integrated Products, Inc. (Sunnyvale, California), among others. In one aspect, the one or more processors can perform metering functions such as determining the number of kilowatt-hours (KWH) of electricity consumed by the load 110 and EV 112 combined and separately.

As indicated above, the metering electronics 308 can also include a network interface operably connected with the metering microcontroller. The network interface enables bi-directional communications with the metering microcontroller over a network 116 and can be a wired or wireless network interface. In one aspect, the network interface can be a CDMA 900/1900 MHz cellular 3G interface. Further comprising the meter can be analog voltage and current inputs that are provided to meter electronics 308. In one aspect, the analog signals are derived from the electrical power feed 106 serving the load 110 and the EV 112, which are used to meter total electrical consumption at the metered facility, and from the power feed 314 to the EV 112 so that the electrical consumption of the EV 112 can be separately measured from total electrical consumption. In one aspect, the analog voltage signals can be provided by one or more potential transformers (PT) 312, if needed, though other means such as a voltage divider, capacitive coupling, or the like can be used. If the voltage level of the source is sufficiently low (e.g., .25 volts AC, or lower), then a PT 312 or other means of stepping down or transforming the voltage can be omitted. Similarly, in one aspect, the analog current signals can be provided by one or more current transformers (CT) 310. In one aspect, the one or more CTs 310 can have a turns ratio of 1:2500. In one aspect, one or more resistors (not shown) can be used to convert the current signal from the CT 310 into a voltage signal. In one aspect, meter electronics 308 can be further comprised of analog to digital converters (ADCs), analog front-ends (AFEs), and the like as may or may not be needed to interface the analog inputs with the metering microcontroller.

Further comprising the embodiment of an integrated electric meter and EVCS as shown in FIG. 3, and substantially enclosed in the enclosure 302, is an electric vehicle charging station (EVCS), wherein the EVCS comprises a charging contactor 316. In one aspect, the charging contactor 316 can be a suitably rated (e.g., 90 amps at 240 VAC) electrical switch that may be operated manually, remotely and/or locally. The charging contactor 316 can be used to connect or disconnect the power feed 314 used to charge the EV 112. In one aspect, the power feed 314 can be a three-wire, 240 VAC feed. In one aspect, normal charging amperage can be 32 amps. Further comprising the EVCS is a charging controller 318 operably connected with the network interface of the meter electronics 308 and the charging contactor 316. In one aspect, the charging controller 318 comprises an intelligent device such as a processor, microprocessor, field-programmable gate array (FPGA), and the like that can be configured to control the charging contactor 316 (i.e., open or close the charging contactor 316 in accordance with commands received by the charging controller 318); detect whether the charging cable 304 is connected to the electric vehicle (EV) 112; determine a level of charge of a battery of the EV 112; and manage a programmable charging schedule for the EV 112.

In one aspect, the charging controller 318 monitors EV connections, determines EV status, starts and stops the charging cycle and informs the EV the amount of current it can draw. Further, in one aspect, the charging controller 318 monitors ground faults, proximity of the charging plug 306 to the EV 112, and the state of charge of the battery of the EV 112. In one aspect, the charging controller 318 can be configured to communicate with a host such as the computing device 118 to determine if a user is authorized to charge an EV 112 based on a RFID tag and/or other identification devices or methods associated with the EV 112 or the user. In various embodiments, the charging controller 318 can be configured to turn ON/OFF the power to the EV 112, vehicle, display the status of the EVCS (e.g., disconnected, connected, fault or charging) through LED indicators on the front of the enclosure or through communications with the computing unit 118 or local communications means as described herein, detection of the state of the charging contactor 316, SAE J1772 communication of the state changes and faults, high and low resistance ground fault detection, ground monitoring on the load side of the charging contactor 316, automatic self-test, zero-sequence fault detection, and additional overcurrent protection.

In one embodiment, hardware for the charging controller 318 comprises a printed circuit board assembly, which is populated with resistors, capacitors, diodes, dip switches, connectors, and the intelligent device (e.g., processor, microprocessor, field-programmable gate array (FPGA), and the like). In one non-limiting example the intelligent device can be a Renasas M16C/65 processor along with PWM module (Renasas Electronics Corporation, Santa Clara, California). In one aspect, the charging controller 318 requires +12Vdc (1.25A) and 5Vdc (2.0A) and contains its own 120/240VAC to VDC power supply reference to chassis ground.

In one aspect, the charging controller 318 comprises a memory or firmware wherein computer-executable software can be stored. In one non-limiting example, software for the charging controller 318 can comprise a timed event/fault system compliant to Underwriters Laboratory, Inc., (Camas, Washington) (UL) standard 1998, which is incorporated herein by reference. In one aspect, each software module processes based on timer tick flags in a main loop of the software. As events/faults occur they enter a fault/event queue. When the event/fault handler of the software processes the queue, it routes events/faults to modules that perform tasks based on them. In various embodiments, the software of the charging controller 318 has multiple functions including, for example: control of the charging contactor; monitor of plug proximity sensor (if equipped) as an element of charging logic; monitor one or more current transformers for over current protection; control of user display (if equipped); control for LED user display (if equipped); communications for Ethernet/WiFi interface (if equipped); ability to network multiple EVCS stations; communications for a debugging port; logic and error reporting to the metering electronics 308 communications interface; monitor and error reporting for EV 112 charging components including battery charge status (reference SAE J1772); storage of configuration information (i.e. Ethernet MAC address) in EEPROM; and the like. Generally, the main software loop controls most of the charging controller's 318 functionality. Every time through the loop the event handler queue is serviced, the charging controller's outputs are refreshed, the PWM is updated and the display is updated. Based on the timer tick interrupt flags are set to indicate a specific amount of time has passed, the main loop checks each flag and calls tasks.

In one aspect, the charging controller 318 can comprise an interface with a transceiver such as, for example, a wireless radio transceiver 320. In one aspect, the wireless radio transceiver 320 comprises a WiFi transceiver using any of an IEEE 802.11 communication standards. In one aspect, the wireless radio transceiver 320 provides bi-directional communications between a user using a user device 322 and the charging controller 318. In one aspect, the charging controller is configured such that when the battery of the EV 112 has reached a desired level of charge (e.g., fully charged), the charging controller 318 opens the charging contactor 316, thereby electrically disconnecting the EVCS from the battery. In one aspect, the charging controller 318 manages the programmable charging schedule for the EV 112 by receiving a time of use schedule over the network 116 from the utility computing device 118 and closes or opens the charging contactor 316 in accordance with the time of use schedule. In one aspect, the time of use schedule comprises electricity rates at various times of a day or days of a week. In one aspect, the network 116 comprises an advanced metering infrastructure (AMI) network as described herein.

Further comprising the integrated electric meter and EVCS 206 is a plug 306 and a charging cable 304, which are substantially external to the enclosure 302. The charging cable 304 is connected to the EVCS and the plug 306. In one aspect, the cable 304 is rated for 30 amps, continuous. In one aspect, the cable 304 is available from Yazaki North America, Inc. (Canton, Michigan). The plug 306 attaches the charging cable to the EV. In one aspect, the plug is in accordance with the Society of Automotive Engineers (SAE) standard J-1772, which is incorporated herein by reference, and is rated for 30 amps, continuous. In one aspect, the plug 306 is available from Yazaki North America, Inc. (Canton, Michigan).

In one embodiment, the integrated electric meter and EVCS 206 further comprises a cut-off circuit breaker 324. In one aspect, the cut-off circuit breaker 324 can be remotely operated over the network 116 to electrically disconnect the electric meter and/or the EVCS and discontinue power to the load 110 and EV 112. In one aspect, the cut-off circuit breaker 324 can be remotely operated over the network 116 to electrically re-connect the electric meter and/or the EVCS, thereby providing power to the load 110 and EV 112. In one aspect, the cut-off circuit breaker 324 can be controlled by a control mechanism 326 that actuates the cut-off circuit breaker 324 (i.e., causes it to disconnect or connect the load 110, EVCS, meter and EV 112). In one aspect, the control mechanism 326 receives a control signal from the meter's electronics 308. Furthermore, in one aspect, the control mechanism 326 can provide a feedback signal to the meter's electronics 308 that indicates the position of the cut-off circuit breaker 324. In other words, the control mechanism 326 can inform the meter's electronics 308 whether the load 110, EVCS, meter and EV 112 are connected or disconnected from electric service. In one aspect, the cut-off circuit breaker 324 is a two-pole, 40-amp breaker.

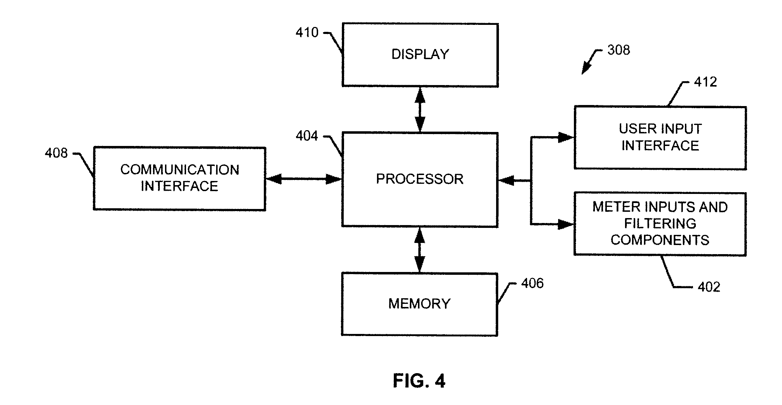

Referring now to FIG. 4, a block diagram of an entity capable of operating as meter electronics 308 is shown in accordance with one embodiment of the present invention. The entity capable of operating as a meter electronics 308 includes various means for performing one or more functions in accordance with embodiments of the present invention, including those more particularly shown and described herein. It should be understood, however, that one or more of the entities may include alternative means for performing one or more like functions, without departing from the spirit and scope of the present invention. As shown, the entity capable of operating as a meter electronics 308 can generally include means, such as one or more processors 404 for performing or controlling the various functions of the entity. In one aspect, the one or more processors can be one or more of a NEC v850 family microprocessor (NEC Corporation, Tokyo, Japan) and/or a Teridian 6533 controller or a Teridian 6521 controller as are available from Maxim Integrated Products, Inc. (Sunnyvale, California), among others. As shown in FIG. 4, in one embodiment, meter electronics 308 can comprise metering components such as meter inputs and filtering components 402. In one aspect, the meter inputs and filter components 402 can comprise voltage and current inputs, one or more ADCs, on ore more AFEs, filtering components, and the like. Further comprising this embodiment of meter electronics 308 are one or more processors 404 and memory 406.

In one embodiment, the one or more processors 404 are in communication with or include memory 406, such as volatile and/or non-volatile memory that stores content, data or the like. For example, the memory 406 may store content transmitted from, and/or received by, the entity. Also for example, the memory 406 may store software applications, instructions or the like for the one or more processors 404 to perform steps associated with operation of the entity in accordance with embodiments of the present invention. In particular, the one or more processors 404 may be configured to perform the processes discussed in more detail herein for receiving an actuation command for a switch, causing a control associated with the switch to implement the actuation, metering one or more power feeders and transmitting the metering information to a computing device over a network. Further, in on embodiment the one or more processors 404 may work with a charging controller for controlling the charging of an EV using an embodiment of the integrated meter and EVCS.

In addition to the memory 406, the one or more processors 404 can also be connected to at least one interface or other means for displaying, transmitting and/or receiving data, content or the like. In this regard, the interface(s) can include at least one communication interface 408 or other means for transmitting and/or receiving data, content or the like, as well as at least one user interface that can include a display 410 and/or a user input interface 412. In one aspect, the communication interface 408 can be used to transfer receive commands from and transfer information to a remote computing device 118 such as the one described below over a network 110. In one aspect, the network 110 is an advanced metering infrastructure (AMI) network. In one aspect, the communication interface 408 can comprise a wireless communication interface such as a Wi-Fi transceiver. The user input interface 412, in turn, can comprise any of a number of devices allowing the entity to receive data from a user, such as a keypad, a touch display, a joystick or other input device.

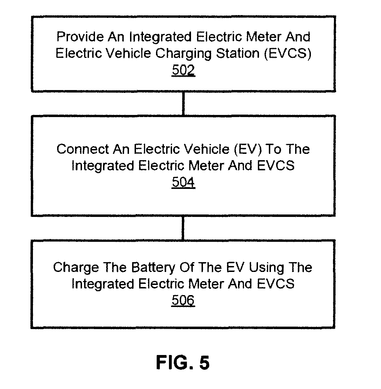

FIG. 5 is a flowchart illustrating a method of practicing an embodiment of the present invention. At step 502, an integrated electric meter and EVCS is provided. In one aspect, the integrated electric meter and EVCS can be comprised of a charging cable and a plug, and an enclosure that substantially encloses an electric meter and EVCS. The electric meter comprises: at least one metering microcontroller, wherein the metering microcontroller is configured to separately measure electrical consumption of one or more electrical loads; one or more current transformers (CTs) and one or more potential transformers (PTs), wherein the one or more CTs and the one or more PTs provide current and voltage signals to the at least one metering microcontroller for measuring the electrical consumption of the one or more electrical loads; and a network interface operably connected with the metering microcontroller, wherein the network interface enables bi-directional communications with the metering microcontroller over a network. In one aspect, the EVCS comprises: a charging contactor; and a charging controller operably connected with the network interface and the charging contactor, wherein the charging controller is configured to: control the charging contactor; detect whether the charging cable is connected to an electric vehicle (EV); determine a level of charge of a battery of the EV; and manage a programmable charging schedule for the EV. The charging cable is connected to the EVCS and the plug, and the plug attaches the charging cable to the EV.

At step 504, the EV is connected to the integrated electric meter and EVCS using the plug and the charging cable. At step 506, the battery of the EV is charged using the integrated electric meter and EVCS.

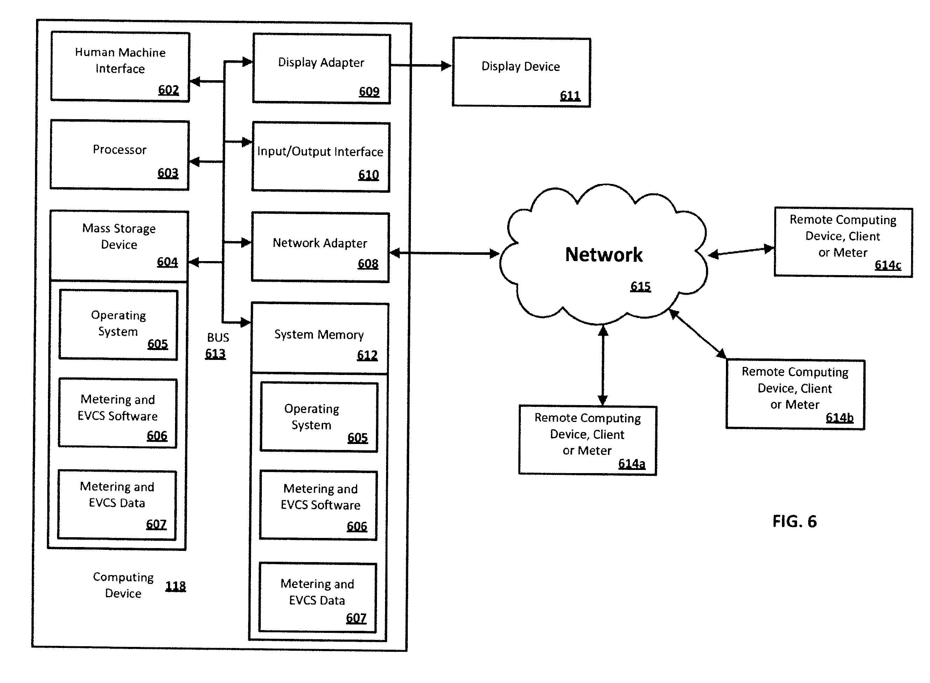

The above system has been described above as comprised of units (e.g., the electric meter, the EVCS, the charging controller 318, the metering electronics 308, the utility computing device 118, etc.) One skilled in the art will appreciate that this is a functional description and that software, hardware, or a combination of software and hardware can perform the respective functions. A unit, such as the electric meter, the EVCS, the charging controller 318, the metering electronics 308, the utility computing device 118, can be software, hardware, or a combination of software and hardware. The units can comprise the metering and EVCS software 606 as illustrated in FIG. 6 and described below. Reference is now made to FIG. 6, which illustrates one type of electronic device that would benefit from embodiments of the present invention. As shown, the electronic device may be a computing device, and, in particular, a server 118.

FIG. 6 is a block diagram illustrating an exemplary operating environment for performing the disclosed methods. This exemplary operating environment is only an example of an operating environment and is not intended to suggest any limitation as to the scope of use or functionality of operating environment architecture. Neither should the operating environment be interpreted as having any dependency or requirement relating to any one or combination of components illustrated in the exemplary operating environment.

The present methods and systems can be operational with numerous other general purpose or special purpose computing system environments or configurations. Examples of well known computing systems, environments, and/or configurations that can be suitable for use with the systems and methods comprise, but are not limited to, personal computers, server computers, laptop devices, and multiprocessor systems. Additional examples comprise machine monitoring systems, programmable consumer electronics, network PCs, minicomputers, mainframe computers, smart meters, smart-grid components, distributed computing environments that comprise any of the above systems or devices, and the like.

The processing of the disclosed methods and systems can be performed by software components. The disclosed systems and methods can be described in the general context of computer-executable instructions, such as program modules, being executed by one or more computers or other devices. Generally, program modules comprise computer code, routines, programs, objects, components, data structures, etc. that perform particular tasks or implement particular abstract data types. The disclosed methods can also be practiced in grid-based and distributed computing environments where tasks are performed by remote processing devices that are linked through a communications network. In a distributed computing environment, program modules can be located in both local and remote computer storage media including memory storage devices.

Further, one skilled in the art will appreciate that the systems and methods disclosed herein can be implemented via a general-purpose computing device in the form of a server 118. The components of the server 118 can comprise, but are not limited to, one or more processors or processing units 603, a system memory 612, and a system bus 613 that couples various system components including the processor 603 to the system memory 612. In the case of multiple processing units 603, the system can utilize parallel computing.

The system bus 613 represents one or more of several possible types of bus structures, including a memory bus or memory controller, a peripheral bus, an accelerated graphics port, and a processor or local bus using any of a variety of bus architectures. By way of example, such architectures can comprise an Industry Standard Architecture (ISA) bus, a Micro Channel Architecture (MCA) bus, an Enhanced ISA (EISA) bus, a Video Electronics Standards Association (VESA) local bus, an Accelerated Graphics Port (AGP) bus, and a Peripheral Component Interconnects (PCI), a PCI-Express bus, a Personal Computer Memory Card Industry Association (PCMCIA), Universal Serial Bus (USB) and the like. The bus 613, and all buses specified in this description can also be implemented over a wired or wireless network connection and each of the subsystems, including the processor 603, a mass storage device 604, an operating system 605, metering and EVCS software 606, metering and EVCS data 607, a network adapter 608, system memory 612, an InputlOutput Interface 610, a display adapter 609, a display device 611, and a human machine interface 602, can be contained within one or more remote computing devices, clients, meters or integrated electric meter and EVCS 614a,b,c at physically separate locations, connected through buses of this form, in effect implementing a fully distributed system or distributed architecture.

The server 118 typically comprises a variety of computer readable media. Exemplary readable media can be any available media that is non-transitory and accessible by the server 118 and comprises, for example and not meant to be limiting, both volatile and non-volatile media, removable and non-removable media. The system memory 612 comprises computer readable media in the form of volatile memory, such as random access memory (RAM), and/or non-volatile memory, such as read only memory (ROM). The system memory 612 typically contains data such as electrical consumption data 607 and/or program modules such as operating system 605 and electrical consumption software 606 that are immediately accessible to and/or are presently operated on by the processing unit 603.

In another aspect, the server 118 can also comprise other non-transitory, removable/non-removable, volatile/non-volatile computer storage media. By way of example, FIG. 6 illustrates a mass storage device 604 that can provide non-volatile storage of computer code, computer readable instructions, data structures, program modules, and other data for the server 118. For example and not meant to be limiting, a mass storage device 604 can be a hard disk, a removable magnetic disk, a removable optical disk, magnetic cassettes or other magnetic storage devices, flash memory cards, CD-ROM, digital versatile disks (DVD) or other optical storage, random access memories (RAM), read only memories (ROM), electrically erasable programmable read-only memory (EEPROM), and the like.

Optionally, any number of program modules can be stored on the mass storage device 604, including by way of example, an operating system 605 and electrical consumption software 606. Each of the operating system 605 and metering and EVCS software 606 (or some combination thereof) can comprise elements of the programming and the metering and EVCS software 606. Metering and EVCS data 607 can also be stored on the mass storage device 604. Metering and EVCS software 606data 607 can be stored in any of one or more databases known in the art. Examples of such databases comprise, DB2® (IBM Corporation, Armonk, NY), Microsoft® Access, Microsoft® SQL Server, (Microsoft Corporation, Bellevue, Washington), Oracle®, (Oracle Corporation, Redwood Shores, California), mySQL, PostgreSQL, and the like. The databases can be centralized or distributed across multiple systems.

In another aspect, the user can enter commands and information into the server 118 via an input device (not shown). Examples of such input devices comprise, but are not limited to, a keyboard, pointing device (e.g., a "mouse"), a microphone, a joystick, a scanner, tactile input devices such as gloves, and other body coverings, and the like These and other input devices can be connected to the processing unit 603 via a human machine interface 602 that is coupled to the system bus 613, but can be connected by other interface and bus structures, such as a parallel port, game port, an IEEE 1394 Port (also known as a Firewire port), a serial port, or a universal serial bus (USB).

In yet another aspect, a display device 611 can also be connected to the system bus 613 via an interface, such as a display adapter 609. It is contemplated that the server 118 can have more than one display adapter 609 and the server 118 can have more than one display device 611. For example, a display device can be a monitor, an LCD (Liquid Crystal Display), or a projector. In addition to the display device 611, other output peripheral devices can comprise components such as speakers (not shown) and a printer (not shown), which can be connected to the server 118 via Input/Output Interface 610. Any step and/or result of the methods can be output in any form to an output device. Such output can be any form of visual representation, including, but not limited to, textual, graphical, animation, audio, tactile, and the like.

The server 118 can operate in a networked environment using logical connections to one or more remote computing devices, clients, meters, or integrated electric meters and EVCS 614a,b,c. By way of example, a remote computing device 614 can be a personal computer, portable computer, a server, a router, a network computer, a vendor or manufacture's computing device, a meter (smart meter), another integrated electric meter and EVCS, peer device or other common network node, and so on. Logical connections between the server 118 and a remote computing device or client 614a,b,c can be made via a local area network (LAN) and a general wide area network (WAN). Such network connections can be through a network adapter 608. A network adapter 608 can be implemented in both wired and wireless environments. Such networking environments are conventional and commonplace in offices, enterprise-wide computer networks, intranets, and other networks 615 such as the Internet or an AMI network.

For purposes of illustration, application programs and other executable program components such as the operating system 605 are illustrated herein as discrete blocks, although it is recognized that such programs and components reside at various times in different storage components of the computing device 118, and are executed by the data processor(s) of the server. An implementation of electrical consumption software 606 can be stored on or transmitted across some form of computer readable media. Any of the disclosed methods can be performed by computer readable instructions embodied on computer readable media. Computer readable media can be any available media that can be accessed by a computer. By way of example and not meant to be limiting, computer readable media can comprise "computer storage media" and "communications media." "Computer storage media" comprise volatile and non-volatile, removable and non-removable media implemented in any methods or technology for storage of information such as computer readable instructions, data structures, program modules, or other data. Exemplary computer storage media comprises, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by a computer.

The methods and systems can employ Artificial Intelligence techniques such as machine learning and iterative learning. Examples of such techniques include, but are not limited to, expert systems, case based reasoning, Bayesian networks, behavior based AI, neural networks, fuzzy systems, evolutionary computation (e.g. genetic algorithms), swarm intelligence (e.g. ant algorithms), and hybrid intelligent systems (e.g. Expert inference rules generated through a neural network or production rules from statistical learning).

As described above and as will be appreciated by one skilled in the art, embodiments of the present invention may be configured as a system, method, or computer program product. Accordingly, embodiments of the present invention may be comprised of various means including entirely of hardware, entirely of software, or any combination of software and hardware. Furthermore, embodiments of the present invention may take the form of a computer program product on a computer-readable storage medium having computer-readable program instructions (e.g., computer software) embodied in the storage medium. Any suitable non-transitory computer-readable storage medium may be utilized including hard disks, CD-ROMs, optical storage devices, or magnetic storage devices.

Embodiments of the present invention have been described above with reference to block diagrams and flowchart illustrations of methods, apparatuses (i.e., systems) and computer program products. It will be understood that each block of the block diagrams and flowchart illustrations, and combinations of blocks in the block diagrams and flowchart illustrations, respectively, can be implemented by various means including computer program instructions. These computer program instructions may be loaded onto a general purpose computer, special purpose computer, or other programmable data processing apparatus, such as the one or more processors 603 discussed above with reference to FIG. 6 or the one or more processors 404 discussed above with reference to FIG. 4, to produce a machine, such that the instructions which execute on the computer or other programmable data processing apparatus create a means for implementing the functions specified in the flowchart block or blocks.

These computer program instructions may also be stored in a non-transitory computer-readable memory that can direct a computer or other programmable data processing apparatus (e.g., one or more processors 603 of FIG. 6, one or more processors 404 discussed above with reference to FIG. 4) to function in a particular manner, such that the instructions stored in the computer-readable memory produce an article of manufacture including computer-readable instructions for implementing the function specified in the flowchart block or blocks. The computer program instructions may also be loaded onto a computer or other programmable data processing apparatus to cause a series of operational steps to be performed on the computer or other programmable apparatus to produce a computer-implemented process such that the instructions that execute on the computer or other programmable apparatus provide steps for implementing the functions specified in the flowchart block or blocks.

Accordingly, blocks of the block diagrams and flowchart illustrations support combinations of means for performing the specified functions, combinations of steps for performing the specified functions and program instruction means for performing the specified functions. It will also be understood that each block of the block diagrams and flowchart illustrations, and combinations of blocks in the block diagrams and flowchart illustrations, can be implemented by special purpose hardware-based computer systems that perform the specified functions or steps, or combinations of special purpose hardware and computer instructions.

Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; the number or type of embodiments described in the specification.

Throughout this application, various publications may be referenced. The disclosures of these publications in their entireties are hereby incorporated by reference into this application in order to more fully describe the state of the art to which the methods and systems pertain.

Many modifications and other embodiments of the inventions set forth herein will come to mind to one skilled in the art to which these embodiments of the invention pertain having the benefit of the teachings presented in the foregoing descriptions and the associated drawings. Therefore, it is to be understood that the embodiments of the invention are not to be limited to the specific embodiments disclosed and that modifications and other embodiments are intended to be included within the scope of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. An integrated electric meter and electric vehicle charging station (EVCS) (206) comprised of:
an enclosure (302), wherein said enclosure (302) substantially encloses:
an electric meter, wherein said electric meter comprises:
at least one metering microcontroller (404), wherein said metering microcontroller (404) is configured to separately measure electrical consumption of one or more electrical loads (110);
one or more current transformers (CTs) (310) and one or more potential transformers (PTs) (312), wherein the one or more CTs (310) and the one or more PTs (312) provide current and voltage signals to the at least one metering microcontroller (404) for measuring the electrical consumption of the one or more electrical loads (110); and
a network interface (408) operably connected with the metering microcontroller (404), wherein the network interface (408) enables bi-directional communications with the metering microcontroller (404) over a network (116);
an electric vehicle charging station (EVCS), wherein the EVCS comprises:
a charging contactor (316); and
a charging controller (318) operably connected with the network interface (408) and the charging contactor (316), wherein the charging controller (318) is configured to:
control the charging contactor (316);
detect whether a charging cable (304) is connected to an electric vehicle (EV) (112);
determine a level of charge of a battery of the EV (112); and
manage a programmable charging schedule for the EV (112);
a plug (306), wherein the charging cable (304) is connected to the EVCS and the plug (306), and the plug (306) attaches the charging cable (304) to the EV (112).

2. The integrated electric meter and EVCS of Claim 1, wherein the enclosure (206) further comprises tamper detection, wherein the tamper detection preferably comprises one of a lock, seal or an electromechanical switch that sends a signal to the metering microcontroller (404) when the enclosure is opened without authorization.

3. The integrated electric meter and EVCS (206) of Claim 1 or Claim 2, wherein the metering microcontroller (404) separately measures total electrical consumption of a facility (108) and electrical consumption by the EVCS.

4. The integrated electric meter and EVCS (206) of Claim 1, 2 or 3, wherein when the charging controller (318) determines the battery of the EV (112) has reached a desired level of charge, the charging controller (318) opens the charging contactor (316) thereby electrically disconnecting the EVCS from the battery.

5. The integrated electric meter and EVCS (206) of any one of Claims 1 to 4, wherein the charging controller (318) manages the programmable charging schedule by receiving a time of use schedule over the network (116) and closes or opens the charging contactor (316) in accordance with the time of use schedule, wherein the time of use schedule preferably comprises electricity rates at various times of a day or days of a week.

6. The integrated electric meter and EVCS of Claim 1, wherein the electric meter further comprises one or more analog front-ends (AFEs).

7. The integrated electric meter and EVCS of any one of Claims 1 to 6, wherein the network comprises an advanced metering infrastructure (AMI) network, wherein the AMI network preferably provides bi-directional communication capability between the electric meter, the EVCS (206) and a utility computer.

8. The integrated electric meter and EVCS (206) of any one of Claims 1 to 6, further comprising a cut-off circuit breaker (324), wherein the cut-off circuit breaker (324) can be remotely operated over the network (116) to electrically disconnect or re-connect the electric meter or the EVCS.

9. The integrated electric meter and EVCS of Claim 8, wherein the cut-off circuit breaker (324) can be remotely operated over the network (116) to electrically re-connect the electric meter or the EVCS.

10. The integrated electric meter and EVCS (206) of any one of Claims 1 to 9, wherein the EVCS further comprises a wireless radio transceiver (320), wherein the wireless radio transceiver (320) preferably provides bi-directional communications between a user using a user device (322) and the charging controller (318).

11. A method comprising:
providing an integrated electric meter and electric vehicle charging station (EVCS) (206), wherein the integrated electric meter and EVCS (206) is comprised of a charging cable (304) and a plug (306), and an enclosure (302) that substantially encloses an electric meter and electric vehicle charging station (EVCS),said electric meter comprises:
at least one metering microcontroller (404), wherein said metering microcontroller (404) is configured to separately measure electrical consumption of one or more electrical loads (110);
one or more current transformers (CTs) (310) and one or more potential transformers (PTs) (312), wherein the one or more CTs (310) and the one or more PTs (312) provide current and voltage signals to the at least one metering microcontroller (404) for measuring the electrical consumption of the one or more electrical loads (110); and
a network interface (408) operably connected with the metering microcontroller (404), wherein the network interface (408) enables bi-directional communications with the metering microcontroller (404) over a network (116);
wherein the EVCS comprises:
a charging contactor (316); and
a charging controller (318) operably connected with the network interface (408) and the charging contactor (316), wherein the charging controller (318) is configured to:
control the charging contactor (316);
detect whether the charging cable (304) is connected to an electric vehicle (EV) (112);
determine a level of charge of a battery of the EV (112); and
manage a programmable charging schedule for the EV (112);
wherein the charging cable (304) is connected to the EVCS and the plug (306), and the plug (306) attaches the charging cable to the EV (112);
connecting the EV (112) to the integrated electric meter and EVCS (206) using the plug (306) and the charging cable (304); and
charging the battery of the EV (112) using the integrated electric meter and EVCS (206).

12. The method of Claim 11, wherein the metering microcontroller (404) separately measures total electrical consumption of a facility and electrical consumption by the EVCS.

13. The method of Claim 11 or Claim 12, wherein when the charging controller (318) determines the battery of the EV (112) has reached a desired level of charge, the charging controller (318) opens the charging contactor (316) thereby electrically disconnecting the EVCS from the battery.

14. The method of Claim 11, 12 or 13, wherein the charging controller (318) manages the programmable charging schedule by receiving a time of use schedule over the network (116) and closing or opening the charging contactor (316) in accordance with the time of use schedule.

15. The method of Claim 14, wherein when the time of use schedule comprises electricity rates at various times of a day or days of a week.
